# EUROPÄISCHE PATENTSCHRIFT

(11) **EP 2 886 313 B1**
(45) Veröffentlichungstag und Bekanntmachung des Hinweises auf die Patenterteilung: **25.05.2016**
(21) Anmeldenummer: 13198868.5
(22) Anmeldetag: 20.12.2013
(51) Int. Cl.: B29C 70/88, B29C 35/02, B32B 15/08

(54) **Verfahren zur Herstellung einer Karosserie oder eines Karosseriemoduls**
Method for manufacturing a vehicle body or a vehicle body module
Procédé de fabrication d'une carrosserie ou d'un module de carrosserie

(43) Veröffentlichungstag der Anmeldung: 24.06.2015
(73) Patentinhaber: MAGNA STEYR Fahrzeugtechnik AG & Co KG, 8041 Graz (AT)
(72) Erfinder: Krammer, Christoph, 8530 Deutschlandsberg (AT); Müller, Herbert, 8051 Graz (AT)
(74) Vertreter: Zangger, Bernd

(56) Entgegenhaltungen:
- WO-A1-2011/100734
- DE-A1-102011 015 071
- DE-B1- 1 557 342

## Beschreibung

### Gebiet der Erfindung

Die vorliegende Erfindung betrifft ein Verfahren zur Herstellung einer Karosserie oder eines Karosseriemoduls, wobei das Karosseriemodul insbesondere ein Unter-Zusammenbau eines Fahrzeuges sein kann.

### Stand der Technik

Für die Herstellung von Karosserien oder Karosseriemodulen ist es bekannt, Sandwichbauteile zu verwenden. Die Sandwichbauteile können vorimprägnierte Halbzeuge, insbesondere sogenannte "prepregs", verwenden, wobei die Matrix der Halbzeuge vor der weiteren Verwendung der Sandwichbauteile in einem Ofen, insbesondere in einem Autoklaven, ausgehärtet wird. Die ausgehärteten Sandwichbauteile werden dann durch bekannte Fügeverfahren wie Punktschweißen, Clinchen etc. mit weiteren Karosserieteilen gefügt. Die fertige Karosserie oder das Karosseriemodul wird daraufhin beispielswese mittels kathodischer Tauchlackierung lackiert.

Aus der EP 2529920 A2 ist ein Verfahren zur Herstellung eines Hybridbauteils für ein Kraftfahrzeug bekannt bei dem ein metallisches Basisprofil mit einem Verstärkungselement aus Faserverbundwerkstoff versehen wird, die in einem Presswerkzeug miteinander verpresst werden. Das Presswerkzeug wird dabei erwärmt um eine Aushärtung des Faserverbundwerkstoffs zu erreichen.

Die DE 10 2011 113 319 A1 beschreibt ein Verfahren zur Herstellung eines Karosseriebauteils mit einem metallischen Grundkörper und einer flächig verbunden Verstärkung aus faserverstärktem Kunststoff (FVK), wobei die Verstärkung auf den Grundkörper aufgesprüht wird. Nach dem Aufbringen des FVK findet die Aushärtung des Harzes statt. WO 2011/100734 offenbart die Merkmale des Oberbegriffs des Anspruchs 1.

### Zusammenfassung der Erfindung

Es ist eine Aufgabe der Erfindung, ein Verfahren zur Herstellung einer Karosserie oder eines Karosseriemoduls anzugeben, das einfach und kostengünstig durchgeführt werden kann.

Die Lösung der Aufgabe erfolgt durch ein Verfahren zur Herstellung einer Karosserie oder eines Karosseriemoduls, umfassend die Schritte
- Erstellen von zumindest einem Sandwichbauteil, umfassend eine erste Blech-Lage, eine Halbzeug-Lage gebildet durch ein mit einer Matrix vorimpregniertes, nicht-ausgehärtetes Halbzeug, und eine zweite Blech-Lage,
- Fügen des Sandwichbauteils in ein Karosserieteil zur Bildung einer Karosserie oder eines Karosseriemoduls, wobei die Matrix der Halbzeug-Lage des Sandwichbauteils nicht ausgehärtet ist,
- Tauchlackieren und Trocknen der Karosserie oder des Karosseriemoduls, wobei die Matrix der Halbzeug-Lage des Sandwichbauteils aushärtet.

Erfindungsgemäß wird ein Karosseriemodul, wie ein Unter-Zusammenbau eines Fahrzeuges oder gleich eine im Wesentlichen gesamte Karosserie eines Fahrzeuges mit zumindest einem Sandwichbauteil erstellt, dessen Faserverbund-Matrix noch nicht ausgehärtet ist. Das zeitaufwändige und kostenintensive Aushärten des oder der einzelnen Sandwichbauteile entfällt somit. Die Erfindung beruht dabei auf der Idee dass eine Handhabung des Sandwichbauteils umfassend eine mittlere vorimpregnierte, nicht-ausgehärtete Halbzeuglage und äußere Blech-Lagen möglich ist, auch wenn das Halbzeug noch nicht ausgehärtet ist, und somit für die Aushärtung das Tauchlackierungs- und Trocknungsverfahren des Karosseriemoduls genutzt werden kann. Dies wird insbesondere durch die Viskosität der verwendeten Matrix begünstigt.

Weiterbildungen der Erfindung sind in den abhängigen Ansprüchen, der Beschreibung sowie den beigefügten Zeichnungen angegeben.

Vorzugsweise ist das Karosseriemodul ein Unter-Zusammenbau. Erstellt und Lackiert wird daher beispielsweise der Unter-Zusammenbau eines Fahrzeuges oder auch gleich eine gesamte Karosserie eines Fahrzeuges.

Zum Erstellen des Sandwichbauteils wird bevorzugt die Halbzeug-Lage auf die erste Blech-Lage gedrückt und die zweite Blech-Lage auf die Halbzeug-Lage gedrückt. Es können auch mehrere Halbzeug-Lagen aufeinander gestapelt und zwischen den Blechen angeordnet werden.

Besonders bevorzugt wird ausschließlich die Matrix der Halbzeug-Lage als Kleber zum Erstellen des Sandwichbauteils verwendet. Auf den Einsatz eines zusätzlichen Klebers zum Fügen der Lagen des Sandwichbauteils kann dann verzichtet werden.

Besonders bevorzugt wird vor dem Erstellen des Sandwichbauteils das Blech für die erste und die zweite Blech-Lage zugeschnitten, gereinigt und getrocknet. Die Oberflächenbehandlung der Blech-Lagen ist insbesondere wichtig für das sichere Fügen der Lagen mittels der Matrix des Halbzeugs.

Zumindest eine der Blech-Lagen des Sandwichbauteils kann aus mehreren separaten Blechen bestehen. Auch die Halbzeug-Lage des Sandwichbauteils kann aus mehreren separaten Halbzeugen bestehen, die auf einer gemeinsamen Blech-Lage angeordnet sein können.

Bevorzugt wird nach dem Erstellen des Sandwichbauteils und vor dem Fügen des Sandwichbauteils in ein Karosserieteil das Sandwichbauteil umgeformt, insbesondere bei Temperaturen unter 70 Grad Celsius, besonders bevorzugt ohne Erwärmung oder bei etwa 60 Grad Celsius, so dass die Matrix noch nicht aushärtet. Das Umformen kann insbesondere durch Tiefziehen erfolgen.

Vorzugsweise werden die erste und zweite Blech-Lage des Sandwichbauteils zumindest in Randbereichen des Sandwichbauteils, gegebenenfalls auch in Kernbereichen, miteinander gefügt. Dies kann insbesondere mittels Punktschweißen, Reibrührschweißen, Nieten, Clinchen und/oder Kleben erfolgen.

Bevorzugt erfolgt das Fügen des Sandwichbauteils in ein Karosserieteil zur Bildung einer Karosserie oder eines Karosseriemoduls durch Schweißen, Nieten, Clinchen, Schrauben und/oder Kleben.

Vorzugsweise umfasst das Tauchlackieren und Trocknen des Karosseriemoduls oder der Karosserie eine Trocknungsphase bei Temperaturen über 100 Grad Celsius, bevorzugt über 120 Grad Celsius, für mindestens 10 Minuten, wobei die Matrix der Halbzeug-Lagen der Sandwichbauteile im Wesentlichen in der Trocknungsphase aushärtet. Dabei heißt "im Wesentlichen" dass die Aushärtung zu zumindest 80 Prozent, besser zu zumindest 90 Prozent während dieser Trocknungsphase erfolgt.

Besonders bevorzugt findet die Trocknungsphase bei Temperaturen von 155 bis 185 Grad Celsius für mindestens 15 Minuten statt.

Nach der Trocknungsphase kann eine Decklackierung bei Temperaturen von mindestens 140 Grad Celsius erfolgen, so dass die Matrix der Halbzeug-Lagen der Sandwichbauteile weiter aushärtet. Vorzugsweise erfolgt jedoch eine vollständige Aushärtung, also zuannähernd 100 Prozent schon in der Trocknungsphase.

### Kurzbeschreibung der Zeichnungen

Die Erfindung wird im Folgenden beispielhaft unter Bezugnahme auf die Zeichnungen beschrieben.
- Fig. 1: zeigen schematisch den Aufbau von Halbzeugen, die sich zur Verwendung in einem erfindungsgemäßen Verfahren eignen, in Explosionsdarstellungen.
- Fig. 2: zeigt schematisch die Lagen eines Sandwiches zur Verwendung in einem erfindungsgemäßen Verfahren.

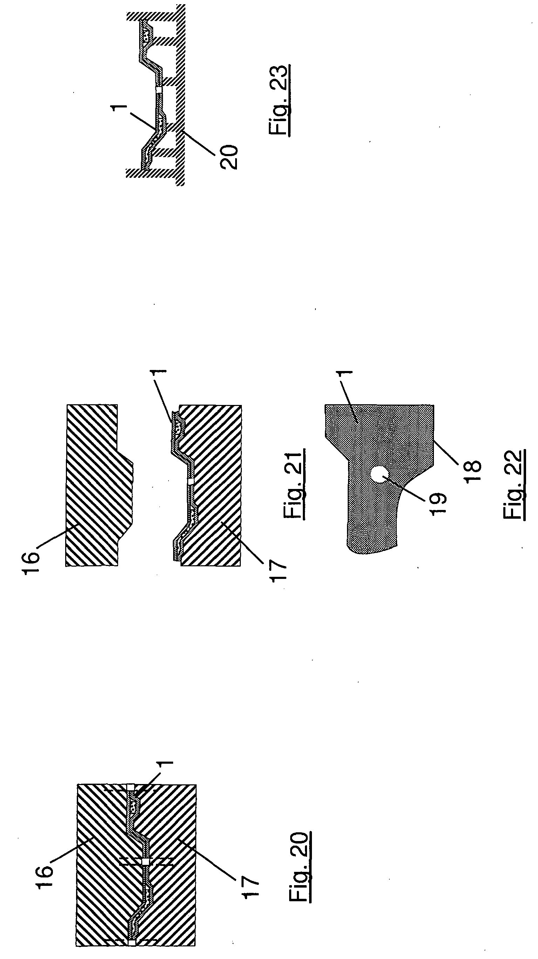

- Fig. 3-26: zeigen schematisch Verfahrensschritte eines erfindungsgemäßen Verfahrens.
- Fig. 27: zeigt ein Sandwich zur Verwendung in einem erfindungsgemäßen Verfahren.

### Detaillierte Beschreibung der Erfindung

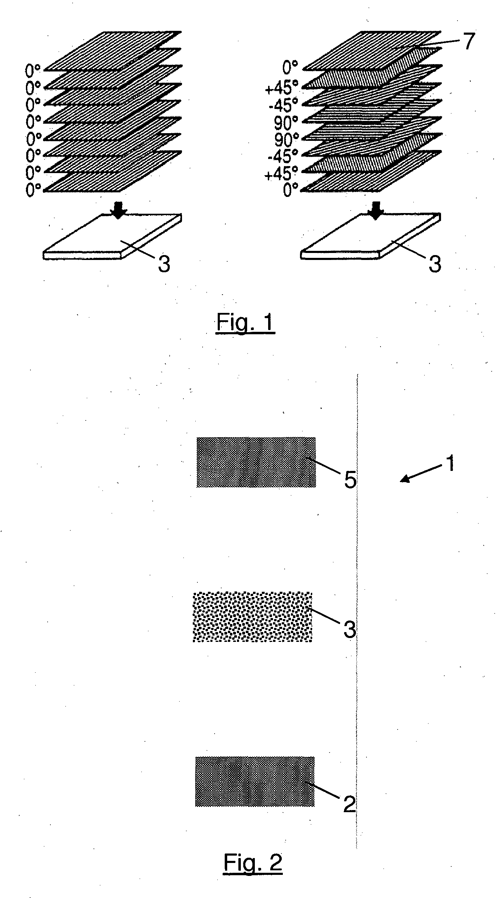

In Fig. 1 sind Halbzeuge 3, sogenannte "Prepregs" dargestellt, die sich zur Verwendung in einem erfindungsgemäßen Verfahren eignen. Die einzelnen Prepregs 3 bestehen aus mehreren CFK Gewebelagen 7, sogenannten Layern, die zu einem unidirektionalen, anisotropen Laminat verbunden sind (links in Fig. 1) oder zu einem multidirektionalen, quasiisotropen Laminat (rechts). Die Gewebelagen 7 sind mit einer Matrix, insbesondere mit Epoxidharz getränkt.

Die Erfindung ist nicht auf CFK Gewebelagen eingeschränkt.
Auch die Verwendung anderer Materialien wie GFK, Aramid-, Basalt-, Cellulosefasern etc. ist möglich. Weiters können auch verschiedene Materialien gemischt werden, sowie auch die Faserausrichtung oder die Dicke der Layer variieren.

Die verwendeten Prepregs weisen einen klebrigen Zustand auf und behalten diesen bis zu einem späteren Prozeßschritt des Lackierens. Die Viskosität des Harzes lässt eine Weiterverarbeitung zu.

Wie in Fig. 2 dargestellt bildet ein Stapel aus erstem Blech 2, vorimprägniertem Halbzeug 3 und zweitem Blech 5 ein Sandwichbauteils 1, das in einem erfindungsgemäßen Verfahren genutzt werden kann.

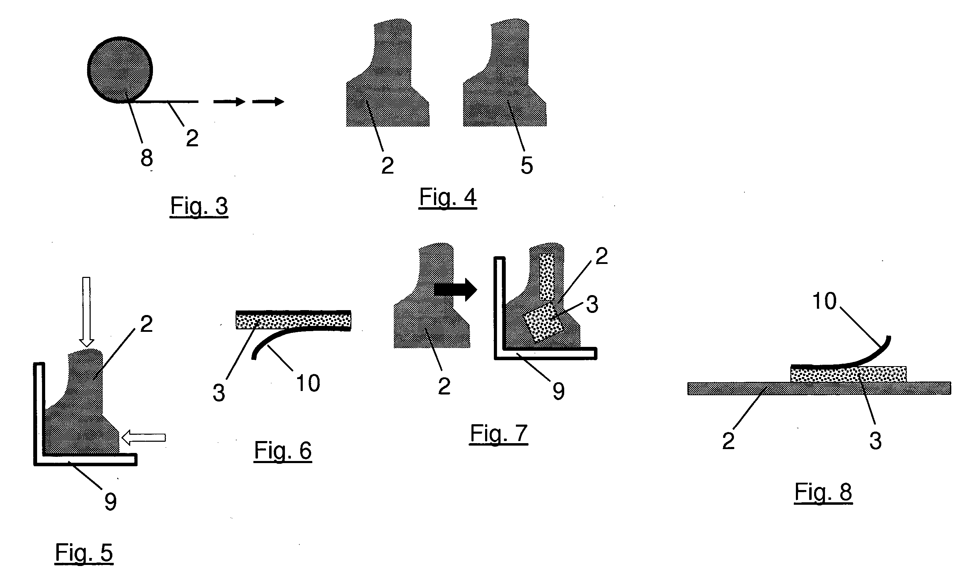

Bleche 2 und Prepregs 3, jeweils vorzugsweise in Form von Rollen 8 (Coils), sind die Ausgangsstoffe zur Herstellung des Sandwich-Bauteils und in weiterer Folge der Karosserie (Fig. 3). Die Prepregs könne auch bereits in Plattenform oder als Platinen als Ausgangsstoff vorliegen.

Die Bleche 2,5 werden vom Coil 8 ausgebreitet und mittels Platinenschneidpresse oder Laser beschnitten (Fig. 4). Die Bleche können aus demselben Coil 8 oder mehreren Coils 8 verwendet werden. Die Bleche können wahlweise unterschiedlich beschnitten werden.

Die Vorbereitung des Halbzeugs 3 wird im Folgenden näher beschrieben.

Das Prepreg-Halbzeug 3 kann aus einer oder üblicherweise mehreren Gewebelagen 7 bestehen, wie in Fig. 1 dargestellt, wobei eine Gewebelage 7 einem Gewebe mit Harztränkung entspricht. Die Prepregs 3 werden ebenfalls von Coils 8 ausgebreitet, wobei diese Coils je nach Aufbau der späteren Halbzeug-Lage 3 jeweils aus unterschiedlichen Materialien bestehen können, wobei hier jeweils auch die Faserausrichtung oder die Dicke der Layer variieren kann. Sind diese mit Schutzfolien 10 versehen, werden diese während des Ausbreitens in den Zwischenschichten entfernt. Bei mehreren Gewebelagen 7 werden diese zueinander durch Walzen gefügt und danach beschnitten. Danach werden die gefügten Gewebelagen 7 mittels Platinenschneidpresse oder mittels Ultraschallschneiden beschnitten.

Optional können auch einzelne Gewebelagen 7 alleine beschnitten werden. Einzeln beschnittene Gewebelagen 7 müssen von Hand oder mit einem Roboter auf die gewünschte Anzahl gestapelt werden.

Die einzelnen Gewebelagen 7 können dieselbe Faserausrichtung (unidirektionale, anisotrop) oder unterschiedliche Faserrichtungen (multidirektional quasiisotrop) aufweisen.

Die vorher beschnittenen Bleche 2, 5 müssen von Hand oder mittels Sprühanlage gereinigt und entfettet werden da diese üblicherweise beölt geliefert werden.

Danach werden die Bleche getrocknet. Eine einwandfreie Oberfläche ist für den nachfolgende Fügeprozeß wichtig damit das Harz anhaftet.

Die Herstellung des Sandwichbauteils 1 wird anhand der Fig. 5 bis 13 beschrieben.

Das erste Blech 2 wird in eine Positioniervorrichtung, die Aufnahme- und Spannvorrichtung 9 eingelegt und dort mittels Spanner in einer definierten Position gehalten (Fig. 5). Bei den zuvor hergestellten Halbzeug-Lagen 3 (Prepregs) werden die unteren Schutzfolien 10 abgezogen (Fig. 6) und diese durch andrücken (tapen) auf das erste Blech 2 gefügt (Fig. 7). Danach erfolgt das Abziehen aller oberen Schutzfolien 10 der prepregs (Fig. 8) und Auflegen des zweiten Blechs 5. Optional kann das zweite Blech 5 mit einer definierten Kraft aufgedrückt werden.

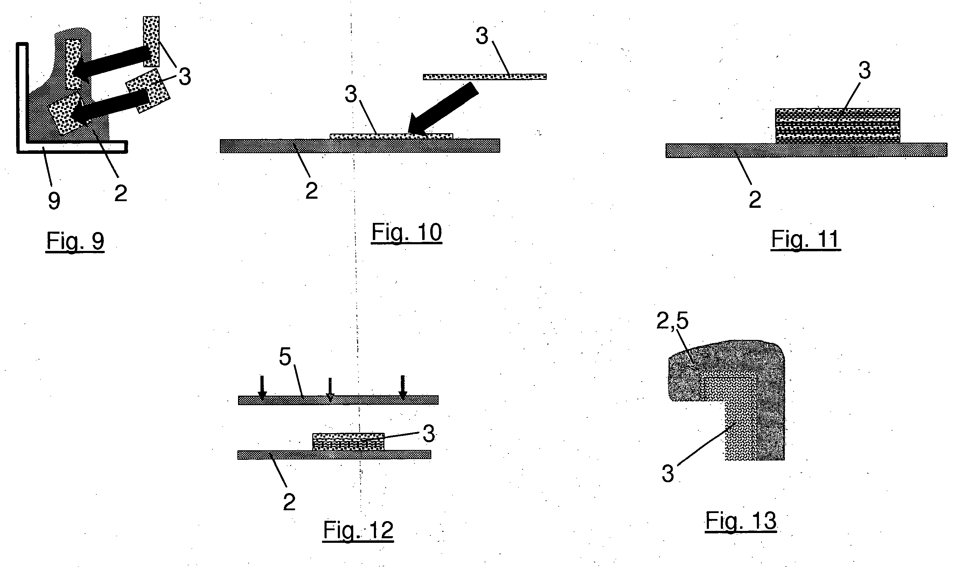

Wie in den Fig. 9 bis 12 dargestellt können auch mehrere Halbzeug-Lagen 3 auf das erste Blech 2 aufgelegt werden um einen Stapel aus Halbzeugen 3 zu bilden.

Wahlweise können mehrere Halbzeuge 3 unterschiedlicher Art (Harz, Faserart, Richtung usw.) und Dimension (Länge, Breite, Höhe) verwendet werden.
Die Blech-Lagen 2,5 verkleben mit der Halbzeug-Lage 3 mittels der Matrix des Halbzeugs 3. Optional kann auch ein zusätzlicher Kleber verwendet werden.

Wie in Fig. 13 dargestellt ist es nützlich für die Bleche 2,5 einen Randbereich vorzusehen in welchem keine Prepregs 3 angeordnet werden. Diese Randbereiche können später zum Fügen des Sandwiches 1 genutzt werden und ermöglichen es einen Abstand von mindestens 30 mm zwischen Fügestellen 22 und Halbzeug 3 einzuhalten.

Hierauf kann ein Vorpress- und Umformprozeß erfolgen.

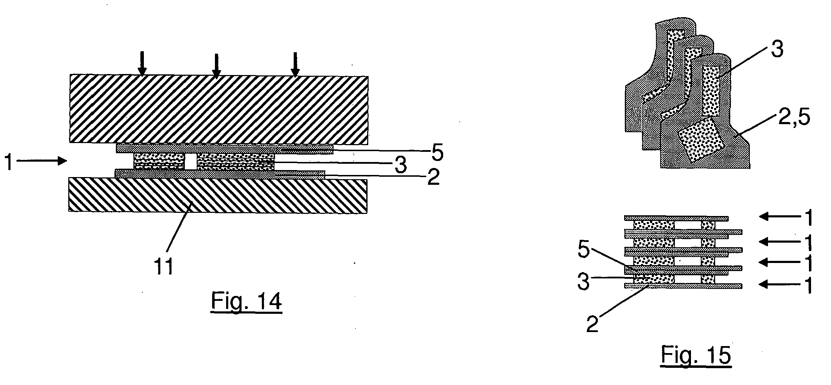

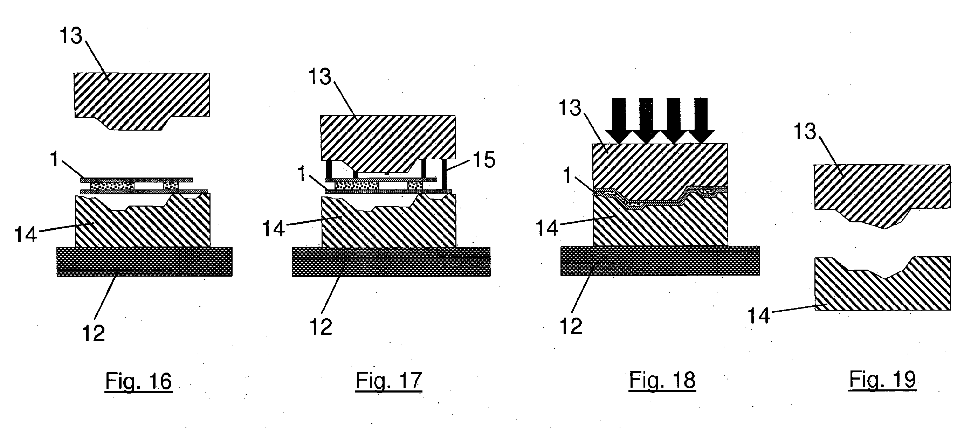

Das Sandwich 1 wird aus der Vorrichtung zur Bildung des Sandwich-Stapels entnommen und in eine Presse 11 eingelegt. Optional kann das Sandwich-Halbzeug außenseitig beölt bzw. geschmiert und vorgewärmt, auf ca. 60 Grad Celsius, werden. Nach dem Niederhalten in der Presse 11 und eventueller Zwischenlagerung (Fig. 15) wird das Sandwich-Halbzeug 1 tiefgezogen. Dabei ist das Epoxidharz dass die Matrix des Halbzeugs 3 bildet noch verarbeitbar, da nicht ausgehärtet. Der Tiefziehprozeß kann konventionell ausgeführt werden (Fig. 16 bis Fig. 18).

Das Umformen des Sandwichbauteils 1 erfolgt ohne Wärmezufuhr oder mit vorgewärmten Platinen, jedoch nicht durch Warmumformen im engeren Sinn. Wie in Fig. 16 dargestellt wird das Sandwich 1 auf einen Ziehstempel 14 auf einem Pressenunterteil 12 aufgelegt. Das Sandwich 1 kann mittels Niederhalter 15 nieder gehalten werden und durch die Matrize 13 umgeformt werden.

Optional erfolgen weitere Schritte wie weiteres Umformen, Lochen oder Einpressen von Hülsen oder Buchsen. Beim Einpressen von Buchsen muss das Sandwich-Bauteil 1 mittels Niederhalter 15 niedergehalten werden.

Daraufhin erfolgt das Entnehmen aus der Presse (Fig. 19) und Einlegen in eine Vorrichtung zum Beschneiden und Lochen mittels Laser oder Stanzbeschneiden, dargestellt durch ein Beschnittwerkzeug Unterteil 17 und ein Beschnittwerkzeug Oberteil 16.

Das Sandwich 1 wird aus dem Beschnittwerkzeug 16, 17 entnommen. Ein Transport des nicht ausgehärteten Bauteils 1 zu einer Fügestation erfolgt in einem Transportgestell 20 mit Formaufnahmen.

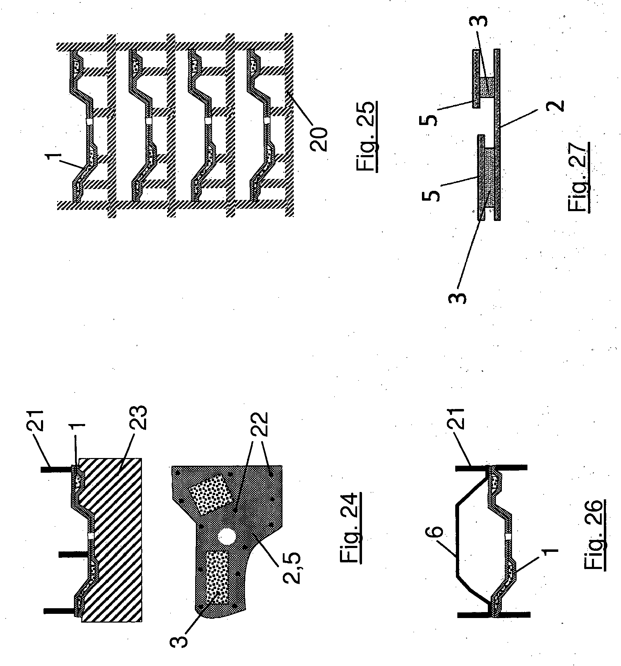

Anschließend erfolgt ein Fügen der Kern- und Randbereiche des Sandwiches 1 mittels Punkt-, Reibrührschweißen, Nieten, Clinchen, Kleben etc. (Fig. 24) in einer Formaufnahme, damit das Bauteil in sich stabil bleibt für die weitere Verarbeitung bis zur finalen Aushärtung. Beim Fügen muss falls hohe Temperaturen eingebracht werden, zum Beispiel durch Schweißen, das Prepreg 3 einen Mindestabstand von ca. 30 mm zu den Fügepunkten 22 aufweisen um nicht beschädigt zu werden.

Das Sandwich 1 kann sodann in einem Transportrack 20 transportiert und gelagert werden.

Das Sandwich 1 wird mit einem Karosserieteil 6 zu einem Unterzusammenbau oder einer Karosserie gefügt (Fig. 26). Das Fügen kann mittels Schweißen, Nieten, Clinchen, Schrauben, Kleben etc. erfolgen. Eine vorhergehende Reinigung der Fügeflächen kann erforderlich sein, zum Beispiel im Fall des Klebens mit Strukturkleber.

Danach erfolgt ein nicht dargestellter Lackierprozess der Karosserie bzw. des Karosseriemoduls und die Aushärtung des Sandwichs.

Die Karosserie bzw. das Modul durchläuft einen konventionellen Lackierprozeß. Der Lackieprozeß kann folgende Prozeßschritte umfassen, zum Beispiel in einer Bodywasher & Vorbehandlungsanlage: Entfettung, Aktivierung, Phosphatierung, Passivierung.

Hierauf erfolgt die eigentliche kathodische Tauchlackierung (KTL): Die Karosserie durchläuft ein oder mehrere Tauchbecken zur KTL-Beschichtung und Reinigung. Die vorherrschenden Temperaturen von bis zu 60 Grad Celsius reichen für eine Aushärtung des Bauteiles zunächst nicht aus. Nach diesen Bädern wird der KTL-Lack in die Karosserie mittels Trocknung bei 155-185 Grad Celsius für mindestens 15 Minuten eingebrannt. Die Karosse durchfährt dabei einen Trockner mit Aufheiz- Halte- und Abkühlphasen.

Das vorhanden Zeit- und Temperaturfenster, ohne Aufheiz- und Abkühlzeiten, von zumindest 15 Minuten bei 155-185 Grad Celsius reicht aus, um das Harz mindestens zu 95 % auszuhärten. Bis zum Ende des Lackierprozesses werden während der Decklackierung erneut hohe Tempera- . turen aufgebracht, mindestens 140 Grad Celsius für 10 Minuten, bei denen das Bauteil weiter ausgehärtet wird.

Wie in Fig. 27 dargestellt, können auf einer gemeinsamen ersten Blech-Lage 2 auch mehrere separate Halbzeug-Lagen 3 angeordnet sein. Besonders in diesem Fall kann es von Vorteil sein, diese separaten Halbzeug-Lagen 3 nicht mit einer gemeinsamen zweiten Blech-Lage 5 abzudecken, sondern mit mehreren separaten kleineren Blechen. Ein Abdecken der Halbzeug-Lage 3 mit Blech-Lagen 2, 5 an der Ober- und Unterseite ist jedenfalls auch deshalb vorteilhaft, da die Halbzeug-Lage 3 ansonsten an einem Tiefziehwerkzeug ankleben könnte.

### Bezugszeichenliste

- 1: Sandwichbauteil
- 2: erste Blech-Lage
- 3: Halbzeug-Lage
- 5: zweite Blech-Lage
- 6: Karosserieteil
- 7: Gewebelage
- 8: Rolle (coil)
- 9: Aufnahme- und Spannvorrichtung
- 10: Schutzfolie
- 11: Presse
- 12: Presseunterteil
- 13: Matrize
- 14: Ziehstempel, Blechhalter
- 15: Niederhalter
- 16: Beschnittwerkzeug Oberteil
- 17: Beschnittwerkzeug Unterteil
- 18: Beschnitt
- 19: Lochung
- 20: Transportrack
- 21: Fügewerkzeug
- 22: Fügepunkt
- 23: Aufnahme Fügestation

## Patentansprüche

1. Verfahren zur Herstellung einer Karosserie oder eines Karosseriemoduls, umfassend die Schritte
- Erstellen von zumindest einem Sandwichbauteil (1), umfassend eine erste Blech-Lage (2), eine Halbzeug-Lage (3) gebildet durch ein mit einer Matrix vorimpregniertes, nicht-ausgehärtetes Halbzeug, und eine zweite Blech-Lage (5),
- Fügen des Sandwichbauteils (1) in ein Karosserieteil (6) zur Bildung einer Karosserie oder eines Karosseriemoduls, wobei die Matrix der Halbzeug-Lage (3) des Sandwichbauteils (1) nicht ausgehärtet ist, **gekennzeichnet durch**
- Tauchlackieren und Trocknen der Karosserie oder des Karosseriemoduls, wobei die Matrix der Halbzeug-Lage (3) des Sandwichbauteils (1) aushärtet.

2. Verfahren nach Anspruch 1,
**dadurch gekennzeichnet, dass** das Karosseriemodul ein Unter-Zusammenbau ist.

3. Verfahren nach zumindest einem der vorhergehenden Ansprüche,
**dadurch gekenntzeichnet**, dass zum Erstellen des Sandwichbauteils (1) die Halbzeug-Lage (3) auf die erste Blech-Lage (2) gedrückt wird und die zweite Blech-Lage (5) auf die Halbzeug-Lage (3) gedrückt wird.

4. Verfahren nach zumindest einem der vorhergehenden Ansprüche,
**dadurch gekennzeichnet, dass** ausschließlich die Matrix der Halbzeug-Lage (3) als Kleber zum Erstellen der Sandwichbauteile (1) verwendet wird.

5. Verfahren nach zumindest einem der vorhergehenden Ansprüche,
**dadurch gekennzeichnet , dass** vor dem Erstellen des Sandwichbauteils (1) das Blech für die erste und die zweite Blech-Lage (2, 5) zugeschnitten, gereinigt und/oder getrocknet wird.

6. Verfahren nach zumindest einem der vorhergehenden Ansprüche,
**dadurch gekennzeichnet, dass** nach dem Erstellen des Sandwichbauteils (1) und vor dem Fügen des Sandwichbauteils (1) in ein Karosserieteil (6) das Sandwichbauteil (1) umgeformt wird, insbesondere bei Temperaturen unter 70 Grad Celsius.

7. Verfahren nach zumindest einem der vorhergehenden Ansprüche,
**dadurch gekennzeichnet, dass** die erste und zweite Blech-Lage (2, 5) des Sandwichbauteils (1) zumindest in Randbereichen des Sandwichbauteils (1) miteinander gefügt werden, insbesondere mittels Punktschweißen, Reibrührschweißen, Nieten, Clinchen und/oder Kleben.

8. Verfahren nach zumindest einem der vorhergehenden Ansprüche,
**dadurch gekennzeichnet, dass** das Fügen des Sandwichbauteils (1) in ein Karosserieteil (6) zur Bildung einer Karosserie oder eines Karosseriemoduls durch Schweißen, Nieten, Clinchen, Schrauben und/oder Kleben erfolgt.

9. Verfahren nach zumindest einem der vorhergehenden Ansprüche,
**dadurch gekennzeichnet, dass** das Tauchlackieren und Trocknen der Karosserie oder des Karosseriemoduls eine Trocknungsphase bei Temperaturen über 100 Grad Celsius für mindestens 10 Minuten umfasst und die Matrix der Halbzeug-Lage (3) des Sandwichbauteils (1) im Wesentlichen in der Trocknungsphase aushärtet.

10. Verfahren nach Anspruch 9,
**dadurch gekennzeichnet, dass** die Trocknungsphase bei Temperaturen von 155 bis 185 Grad Celsius für mindestens 15 Minuten stattfindet.

11. Verfahren nach Anspruch 9 oder 10,
**dadurch gekennzeichnet, dass** nach der Trocknungsphase eine Decklackierung bei Temperaturen von mindestens 140 Grad Celsius erfolgt, so dass die Matrix der Halbzeug-Lage (3) des Sandwichbauteils (1) weiter aushärtet.

12. Verfahren nach zumindest einem der vorhergehenden Ansprüche,
**dadurch gekennzeichnet, dass** zumindest eine der Blech-Lagen (2, 5) aus mehreren separaten Blechen besteht und/oder die Halbzeug-Lage (3) des Sandwichbauteils (1) aus mehreren separaten Halbzeugen besteht.

## Claims

1. Method for producing a vehicle body or a vehicle body module, comprising the steps of
- producing at least one sandwich component (1), comprising a first metal sheet layer (2), a semifinished product layer (3) formed by a non-cured semifinished product pre-impregnated with a matrix, and a second metal sheet layer (5),
- joining the sandwich component (1) into a vehicle body part (6) to form a vehicle body or a vehicle body module, the matrix of the semifinished product layer (3) of the sandwich component (1) not being cured, **characterized by**
- dip coating and drying the vehicle body or the vehicle body module, the matrix of the semifinished product layer (3) of the sandwich component (1) being cured.

2. Method according to Claim 1,
**characterized in that** the vehicle body module is a subassembly.

3. Method according to at least one of the preceding claims,
**characterized in that** the sandwich component (1) is produced by pressing the semifinished product layer (3) onto the first metal sheet layer (2) and by pressing the second metal sheet layer (5) onto the semifinished product layer (3).

4. Method according to at least one of the preceding claims,
**characterized in that** exclusively the matrix of the semifinished product layer (3) is used as an adhesive for producing the sandwich components (1).

5. Method according to at least one of the preceding claims,
**characterized in that**, before the sandwich component (1) is produced, the metal sheet for the first and the second metal sheet layers (2, 5) is cut to size, cleaned and/or dried.

6. Method according to at least one of the preceding claims,
**characterized in that**, after the sandwich component (1) has been produced and before the sandwich component (1) is joined into a vehicle body part (6), the sandwich component (1) is formed, in particular at temperatures of below 70°C.

7. Method according to at least one of the preceding claims,
**characterized in that** the first and second metal sheet layers (2, 5) of the sandwich component (1) are joined to one another at least in marginal regions of the sandwich component (1), in particular by means of spot welding, friction stir welding, riveting, clinching and/or adhesive bonding.

8. Method according to at least one of the preceding claims,
**characterized in that** the sandwich component (1) is joined into a vehicle body part (6) to form a vehicle body or a vehicle body module by welding, riveting, clinching, screwing and/or adhesive bonding.

9. Method according to at least one of the preceding claims,
**characterized in that** the dip coating and drying of the vehicle body or of the vehicle body module comprises a drying phase at temperatures of above 100°C for at least 10 minutes and the matrix of the semifinished product layer (3) of the sandwich component (1) is cured substantially in the drying phase.

10. Method according to Claim 9,
**characterized in that** the drying phase takes place at temperatures of 155°C to 185°C for at least 15 minutes.

11. Method according to Claim 9 or 10,
**characterized in that** the drying phase is followed by topcoat application at temperatures of at least 140°C, such that the matrix of the semifinished product layer (3) of the sandwich component (1) is cured further.

12. Method according to at least one of the preceding claims,
**characterized in that** at least one of the metal sheet layers (2, 5) consists of a plurality of separate metal sheets and/or the semifinished product layer (3) of the sandwich component (1) consists of a plurality of separate semifinished products.

## Revendications

1. Procédé de fabrication d'une carrosserie ou d'un module de carrosserie, comprenant les étapes suivantes:
- production d'au moins un composant sandwich (1), comprenant une première couche de tôle (2), une couche de demi-produit (3) formée par un demi-produit non durci, pré-imprégné avec une matrice, et une deuxième couche de tôle (5),
- jonction du composant sandwich (1) dans une pièce de carrosserie (6) pour la formation d'une carrosserie ou d'un module de carrosserie, dans lequel la matrice de la couche de demi-produit (3) du composant sandwich (1) n'est pas durcie,
**caractérisé par**
- le laquage par immersion et le séchage de la carrosserie ou du module de carrosserie, dans lequel la matrice de la couche de demi-produit (3) du composant sandwich (1) durcit.

2. Procédé selon la revendication 1, **caractérisé en ce que** le module de carrosserie est un sous-ensemble.

3. Procédé selon au moins une des revendications précédentes, **caractérisé en ce que**, pour produire le composant sandwich (1), on presse la couche de demi-produit (3) sur la première couche de tôle (2) et on presse la deuxième couche de tôle (5) sur la couche de demi-produit (3).

4. Procédé selon au moins une des revendications précédentes, **caractérisé en ce que** l'on utilise exclusivement la matrice de la couche de demi-produit (3) comme colle pour la production des composants sandwiches (1).

5. Procédé selon au moins une des revendications précédentes, **caractérisé en ce que** l'on découpe, on nettoie et/ou on sèche la tôle pour la première et la deuxième couches de tôle (2, 5) avant la production du composant sandwich (1).

6. Procédé selon au moins une des revendications précédentes, **caractérisé en ce que** l'on déforme le composant sandwich (1), en particulier à des températures inférieures à 70 degrés Celsius, après la production du composant sandwich (1) et avant la jonction du composant sandwich (1) dans une pièce de carrosserie (6).

7. Procédé selon au moins une des revendications précédentes, **caractérisé en ce que** l'on joint l'une à l'autre la première et la deuxième couches de tôle (2, 5) du composant sandwich (1) au moins dans des régions de bord du composant sandwich (1), en particulier par soudage par points, par soudage par friction, par rivetage, par estampage et/ou par collage.

8. Procédé selon au moins une des revendications précédentes, **caractérisé en ce que** l'on effectue la jonction du composant sandwich (1) dans une pièce de carrosserie (6) pour la formation d'une carrosserie ou d'un module de carrosserie par soudage, rivetage, estampage, vissage et/ou collage.

9. Procédé selon au moins une des revendications précédentes, **caractérisé en ce que** le laquage par immersion et le séchage de la carrosserie ou du module de carrosserie comprend une phase de séchage à des températures supérieures à 100 degrés Celsius pendant au moins 10 minutes et la matrice de la couche de demi-produit (3) du composant sandwich (1) durcit essentiellement dans la phase de séchage.

10. Procédé selon la revendication 9, **caractérisé en ce que** la phase de séchage a lieu à des températures de 155 à 185 degrés Celsius pendant au moins 15 minutes.

11. Procédé selon la revendication 9 ou 10, **caractérisé en ce que** l'on effectue, après la phase de séchage, un laquage de finition à des températures d'au moins 140 degrés Celsius, de telle manière que la matrice de la couche de demi-produit (3) du composant sandwich (1) continue à durcir.

12. Procédé selon au moins une des revendications précédentes, **caractérisé en ce qu'**au moins une des couches de tôle (2, 5) se compose de plusieurs tôles séparées et/ou la couche de demi-produit (3) du composant sandwich (1) se compose de plusieurs demi-produits séparés.
